# EUROPÄISCHE PATENTSCHRIFT

(11) **EP 0 937 595 B1**
(45) Veröffentlichungstag und Bekanntmachung des Hinweises auf die Patenterteilung: **20.08.2003**
(21) Anmeldenummer: 99102349.0
(22) Anmeldetag: 06.02.1999
(51) Int. Cl.: B60H 1/22

(54) **Heizungs- oder Klimaanlage für Fahrzeuge**
Heating or air conditioning for vehicles
Installation de chauffage ou de climatisation pour véhicules

(30) Priorität: 20.02.1998 DE 19807143; 20.01.1999 DE 19902050
(43) Veröffentlichungstag der Anmeldung: 25.08.1999
(73) Patentinhaber: smart gmbh, 71032 Böblingen (DE)
(72) Erfinder: Ebner, Andreas, 70180 Stuttgart (DE); Henseler, Wolfgang, 72076 Tübingen (DE)
(74) Vertreter: Weiss, Klaus

(56) Entgegenhaltungen:
- EP-A- 0 707 434
- EP-A- 0 719 664
- EP-A- 0 857 922
- DE-A- 4 433 814
- DE-C- 540 579
- US-A- 3 300 619
- PATENT ABSTRACTS OF JAPAN vol. 012, no. 484 (M-776), 16. Dezember 1988 (1988-12-16) & JP 63 203411 A (NIPPON DENSO CO LTD), 23. August 1988 (1988-08-23)
- PATENT ABSTRACTS OF JAPAN vol. 017, no. 389 (M-1449), 21. Juli 1993 (1993-07-21) & JP 05 069732 A (ZEXEL CORP), 23. März 1993 (1993-03-23)
- PATENT ABSTRACTS OF JAPAN vol. 1998, no. 03, 27. Februar 1998 (1998-02-27) & JP 09 301095 A (TOYO RADIATOR CO LTD;MITSUBISHI HEAVY IND LTD), 25. November 1997 (1997-11-25)

## Beschreibung

Die Erfindung betrifft eine Heizungs- oder Klimaanlage für eine Fahrgastzelle eines Kraftfahrzeugs gemäß dem Oberbegriff des Patentanspruchs 1.

Bei Kraftfahrzeugen, deren Brennkraftmaschine oder Motor verbrauchsoptimiert konstruiert ist, fällt eine wesentlich geringere Verlustwärme an, wodurch die durch die Motorkühlung zur Verfügung gestellte Heizenergie für die Heizung der Fahrgastzelle mitunter zu gering ist. Abhilfe schafft hier eine elektrische Zusatzheizung, die bei Bedarf den den Wärmetauscher durchströmenden Luftstrom stärker aufheizt.

Bei einer bekannten Heizungsanlage der eingangs genannten Art (DE 37 15 194 A1) ist der vom Kühlwasser durchströmte Wärmetauscher in einem Außenluft zur Fahrgastzelle führenden Kanal angeordnet. Daneben ist ebenfalls in dem die Außenluft führenden Kanal eine elektrische Zusatzheizung vorgesehen, die für eine Erwärmung der Luft während der Warmlaufphase des Verbrennungsmotors sorgt. Um eine möglichst intensive Erwärmung der Luft mit der Zusatzheizung zu erreichen, weist diese einen großflächigen, auf eine Niedertemperatur von weniger als 150° C regelbaren Heizleiter auf und ist als flaches, kastenförmiges Gebilde geformt, das in Strömungsrichtung der Luft unmittelbar hinter dem Wärmetauscher angeordnet und an diesem befestigt ist, wobei der Wärmetauscher den Träger für die elektrische Zusatzheizung bildet.

Bei einer bekannten Heizungsanlage der eingangs genannten Art (DE 42 38 364 A1) ist die elektrische Zusatzheizung ebenfalls dem Wärmetauscher nachgeordnet, so daß der von einem Gebläse erzeugte Luftstrom zunächst den Wärmetauscher durchströmt, nur teilweise erwärmt wird und anschließend durch die elektrische Zusatzheizung hindurchströmt und hier auf eine höhere Temperatur aufgeheizt wird. Die so vorgewärmte Luft strömt in die Fahrgastzelle ein. Ein in der Fahrgastzelle angeordneter Innenraumtemperaturfühler, der zusammen mit einem Sollwertgeber den Heizbedarf ermittelt und in dem in die Fahrgastzelle einströmenden Luftstrom angeordnet ist, steuert über ein Steuergerät den Kühlwasserfluß durch den Wärmetauscher und die Einschaltdauer der Zusatzheizung.

Bei einer ebenfalls bekannten Heizungsanlage, nach dem Oberbegrif des Anspruchs 1, für Kraftfahrzeuge (DE 44 33 814 A1) setzt sich die dort ebenfalls vorhandene elektrische Zusatzheizung aus einer Mehrzahl von sog. PTC-Elementen (Positive Temperature Coefficient) zusammen, die elektrisch aufgeheizt und von dem den Wärmetauscher verlassenden Luftstrom um- bzw. durchströmt werden.

Der Erfindung liegt die Aufgabe zugrunde, eine Heizungs- oder Klimaanlage der eingangs genannten Art so zu gestalten, daß für den Einbau der elektrischen Zusatzheizung kein gesonderter Bauraum im Luftführungskanal erforderlich ist.

Die Aufgabe ist durch die Merkmale im Kennzeichenteil des Patentanspruchs 1 gelöst.

Die erfindungsgemäße Heizungs- oder Klimaanlage hat zur Steuerung der Zusatzheizung in Abhängigkeit von den Wärmebedarf bestimmenden Größen, wie Außentemperatur, Kühlwassertemperatur, ein Steuergerät vorgesehen, das am Wärmetauscher so angeordnet ist, daß es von der in den Wärmetauscher einströmenden Luft bestrichen ist. Das Steuergerät weist eine Leistungselektronik und Kühlkörper zur Wärmeabfuhr auf und die Anordnung des Steuergeräts ist auf der Lufteintrittsseite des Wärmetauschers so getroffen, daß mindestens die Kühlkörper im Luftstrom liegen. Durch diese Unterbringung des für die Steuerung der elektrischen Zusatzheizung erforderlichen Steuergeräts am Wärmetauscher erhält man eine kompakte Baueinheit, die in einem einzigen Montagevorgang durch Verschrauben, Verclipsen oder eine andere klapper- und spielfreie Verbindung ohne Verkabelung der Heizstäbe und des Steuergeräts untereinander im Klimakasten untergebracht werden kann.

Zweckmäßige Ausführungsformen der erfindungsgemäßen Heizungs-oder Klimaanlage mit vorteilhaften Weiterbildungen und Verbesserungen der Erfindung sind in den weiteren Patentansprüchen angegegeben.

Gemäß einer bevorzugten Ausführungsform der Erfindung weist der Wärmetauscher eine Mehrzahl von vom Kühlwasser durchströmten Wasserkanälen, die sich im Parallelabstand voneinander über die Luftdurchtrittsfläche des Wärmetauschers erstrecken und endseitig jeweils in einem Wassersammelkasten münden, sowie Wärmeleitlamellen auf, die mit den Wasserkanälen verbunden sind. Die elektrische Zusatzheizung besitzt eine Mehrzahl von elektrischen Heizstäben, die sich zwischen den Wasserkanälen und parallel dazu in vorzugsweise gleichmäßiger Verteilung über die Luftdurchtrittsfläche erstrecken. Bevorzugt verlaufen dabei wechselweise ein mit Wärmeleitelementen versehener Wasserkanal und ein elektrischer Heizstab parallel nebeneinander.

Gemäß einer vorteilhaften Ausführungsform der Erfindung besitzt jeder Heizstab zwei parallel zueinander verlaufende Stromschienen und eine Mehrzahl von PTC-Elementen, die voneinander beabstandet zwischen den beiden Stromschienen angeordnet und mit diesen mechanisch und elektrisch leitend verbunden sind.

Um elektrische Kurzschlüsse zu vermeiden, ist zwischen jedem Heizstab und einem benachbarten Wasserkanal eine elektrische Isolierplatte angeordnet, an der sich einerseits die mit dem Wasserkanal verbundenen Wärmeleitelemente und andererseits von den Stromschienen abstehende Wärmeleitelemente abstützen.

Gemäß einer vorteilhaften Ausführungsform der Erfindung ist das Steuergerät auf einem Kunststoffrahmen angeordnet, der auf der Lufteintrittsseite des Wärmetauschers auf diesen aufgesetzt und mit diesem verbunden, z.B. verclipst oder verschraubt ist. Die zwischen den Wasserkanälen des Wärmetauschers angeordneten elektrischen Heizstäbe der Zusatzheizung sind jeweils in einem von der dem Wärmetauscher zugekehrten Unterseite des Kunststoffrahmens einstückig abstehenden, in den Wärmetauscher eintauchenden, rahmenartigen Trog aufgenommen, dessen längere Trogwände vorzugsweise die zwischen den Heizstäben und den Wasserkanälen verlaufenden Isolationsplatten bilden.

Gemäß einer vorteilhaften Ausführungsform der Erfindung ist für die elektrische Zusatzheizung ein mechanischer Ein-/Ausschalter vorgesehen, der räumlich in der Zusatzheizung integriert und von einem im Armaturenbrett plazierten manuellen Bedienknopf über beispielsweise einen Bowdenzug und einen durch diesen schwenkbaren Nocken betätigbar ist. Durch die räumliche Integration des Ein-/Ausschalters in die elektrische Zusatzheizung wird eine konzentrierte Bauweise des kompletten Zuheizsystems mit mechanischer Schalteinrichtung erzielt. Somit ist es möglich, die Heizungsvarianten mit oder ohne elektrische Zusatzheizung nur auf den Klimakasten zu beschränken, ohne weitere Bedienelemente im Armaturenbrett zu verändern. Die Gebläsekastenvarianten mit oder ohne elektrische Zusatzheizung werden erst unmittelbar vor der Montage gebildet, was bedeutet, daß Klimakästen und elektrische Zuheizmodule separat angeliefert werden. Durch die unmittelbar vor Verbau gebildeten Varianten werden Logistikkosten eingespart und der Koordinierungsaufwand minimiert. Die Fertigung kann flexibler auf den Bedarf reagieren. Dabei kann die elektrische Zusatzheizung sowohl in den Wärmetauscher integriert als auch separat vom Wärmetauscher in den Luftstrom eingesetzt werden.

Eine Einsparung von Bauelementen erhält man, wenn gemäß einer vorteilhaften Ausführungsform der Erfindung der Ein-/Ausschalter von einer im Klimakasten vorhandenen Luftmischklappe zum Mischen eines den Wärmetauschers umgehenden Kaltluftstrom und eines durch den Wärmetauscher strömenden Warmluftstroms betätigt wird, wobei der Ein-/Ausschalter so justiert ist, daß sein im elektrischen Stromkreis der Zusatzheizung liegender Schaltkontakt in der Schwenkendstellung der Luftmischklappe für maximale Warmluftzufuhr geschlossen ist. Die Luftmischklappe wird dabei von einem die Schwenkstellung der Luftmischklappe vorgebenden Temperatureinsteller betätigt.

Gemäß einer vorteilhaften Ausführungsform der Erfindung kann der mechanische Ein-/Ausschalter für die elektrische Zusatzheizung räumlich auch an einem dem Wärmetauscher vorgeordneten Gebläse zur Erzeugung des den Wärmetauscher und die elektrische Zusatzheizung durchströmenden Luftstroms angeordnet werden, wobei der Ein-/Ausschalter wiederum von einem im Armaturenbrett plazierten manuellen Bedienknopf aus bestätigbar ist. Hier ergeben sich die gleichen Vorteile wie bei der räumlichen Unterbringung des Ein-/Ausschalters im Heizmodul der elektrischen Zusatzheizung selbst.

Die Erfindung ist anhand von in der Zeichnung dargestellten Ausführungsbeispielen im folgenden näher beschrieben. Es zeigen jeweils in schematischer Darstellung:
- Fig. 1: einen Längsschnitt einer Klimaanlage für eine Fahrgastzelle eines Kraftfahrzeugs,
- Fig. 2: einen Längsschnitt gemäß Schnittlinie II-II in Fig. 3 eines Wärmetauschers mit integrierter elektrischer Zusatzheizung der Klimaanlage in Fig. 1,
- Fig. 3: ausschnittweise eine perspektivische Ansicht des Wärmetauschers mit integrierter elektrischer Zusatzheizung in Fig. 2.
- Fig. 4: eine perspektivische Darstellung des Wärmetauschers in Fig. 2 und 3 vor der Montage der elektrischen Zusatzheizung,
- Fig. 5: eine perspektivische Darstellung eines auf den Wärmetauscher gemäß Fig. 4 aufsetzbaren Kunststoffrahmens mit Trögen zur Aufnahme der elektrischen Zusatzheizung,
- Fig. 6: eine perspektivische Darstellung eines mit dem Kunststoffrahmen in Fig. 5 verbindbaren Steuergeräts für die elektrische Zusatzheizung,
- Fig. 7: eine perspektivische Ansicht des Kunststoffrahmens in Richtung Pfeil VII in Fig. 5 mit einem eingesetzten Heizstab der elektrischen Zusatzheizung, vergrößert dargetellt,
- Fig. 8: eine perspektivische Darstellung einer Stromschiene mit Kontaktschiene der elektrischen Zusatzheizung in Fig. 7, vergrößert dargestellt,
- Fig. 9: eine perspektivische Unteransicht eines Heizmoduls einer elektrischen Zusatzheizung gemäß einem weiteren Ausführungsbeispiel,
- Fig.10: eine Frontansicht des Heizmoduls in Richtung X in Fig. 9,
- Fig.11: eine Seitenansicht eines Ein-/Ausschalters für die elektrische Zusatzheizung in Fig. 9 gemäß einem weiteren Ausführungsbeispiel.

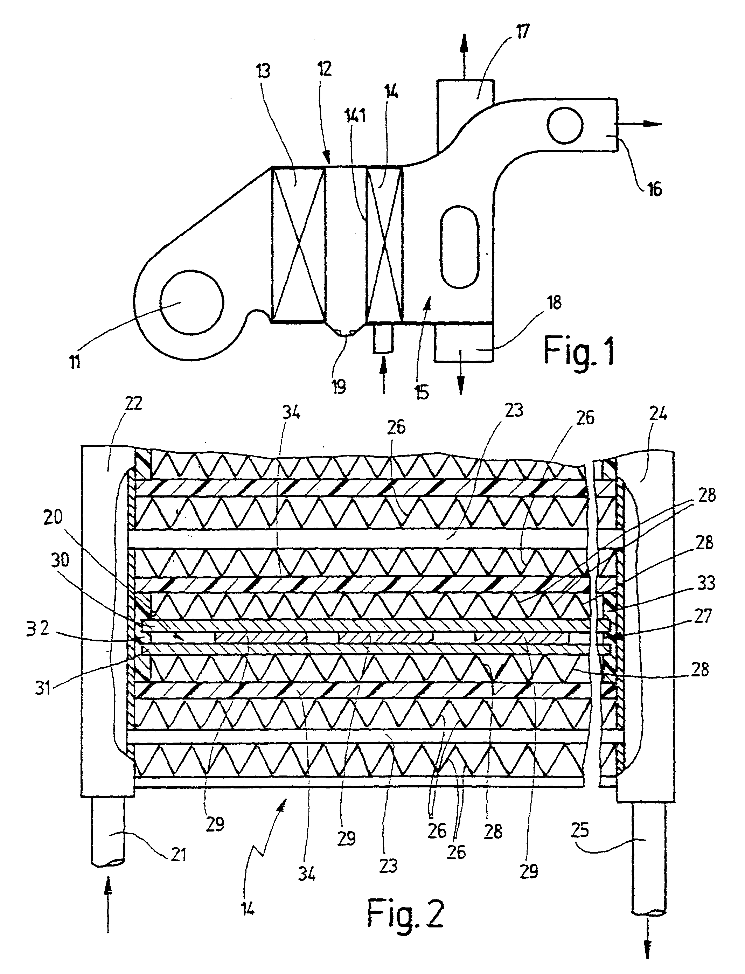

Die in Fig. 1 schematisch im Längsschnitt dargestellte Klimaanlage weist ein Gebläse 11 auf, das an dem Eingang eines Luftführungskastens 12, auch Klimakasten genannt, angeschlossen ist. Im Luftführungskasten 12 sind ein in einem Kältemittelkreislauf eingebundener Verdampfer 13 und ein in dem Kühlwasserkreislauf der Brennkraftmaschine oder des Verbrennungsmotors des Kraftfahrzeugs eingebundener Wärmetauscher 14 aufgenommen, die stromabwärts des Gebläsestroms in der genannten Reihenfolge angeordnet sind. Dem Wärmetauscher 14 ist ein Luftverteiler 15 unmittelbar nachgeordnet, von dem drei Luftkanäle 16 - 18 abzweigen. Der mittlere Luftkanal 16 führt zu hier nicht dargestellten Luftaustrittsdüsen in der Mittelebene der Fahrgastzelle, während der Luftkanal 17 zu den Defrosterdüsen an der Unterseite der Frontscheibe der Fahrgastzelle und der Luftkanal 18 zu im Fußraum der Fahrgastzelle angeordneten Fußraumdüsen führt. Die vom Gebläse 11 wahlweise aus der Fahrzeugumgebung angesaugte Frischluft oder aus der Fahrgastzelle angesaugte Mischluft wird im Verdampfer 13 gekühlt und entfeuchtet und im Wärmetauscher 14, der von dem heißen Kühlwasser der Brennkraftmaschine durchströmt ist, aufgewärmt. Die so konditionierte Luft wird über den Luftverteiler 15 auf die einzelnen Luftaustrittsdüsen in der Fahrgastzelle aufgeteilt. Das aus der vom Gebläse 11 geförderten Luft ausfallende und im Luftführungskasten 12 sich niederschlagende Wasser wird über ein Wasserabscheider 19 im Kastenabschnitt zwischen Verdampfer 13 und Wärmetauscher 14 abgeführt.

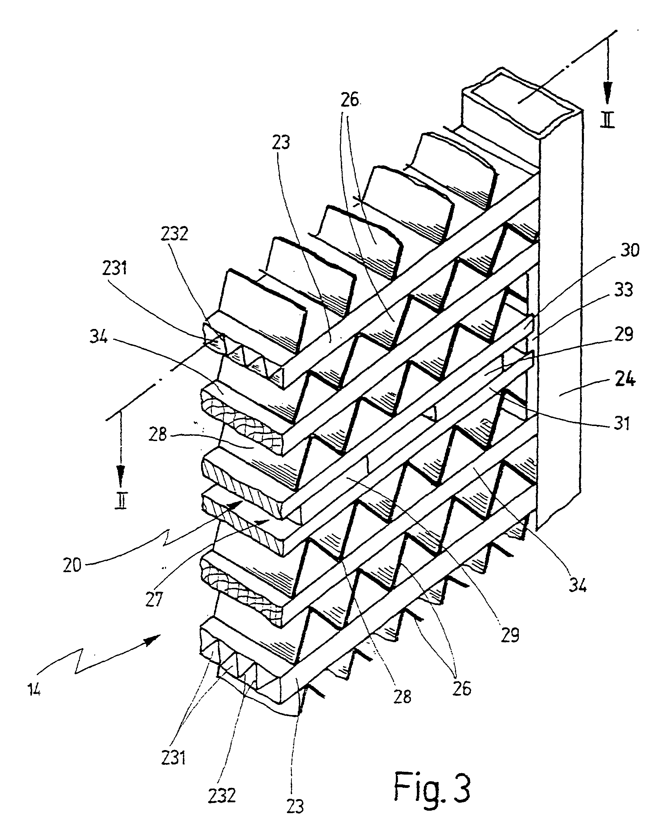

In Fig. 2 und 3 ist der Wärmetauscher 14 mit allen seinen Einzelheiten dargestellt. Das von der Brennkraftmaschine kommende heiße Kühlwasser tritt über einen Kühlwasserzulauf 21 in einen Wassersammelkasten 22 ein und verteilt sich hier auf eine Vielzahl von Wasserkanälen 23, die sich parallel zueinander über die gesamte Luftdurchtrittsfläche 141 des Wärmetauschers 14 erstrecken. Die Wasserkanäle 23 münden in einem auf der gegenüberliegenden Seite des Wärmetauschers 14 parallel zu dem ersten Wassersammelkasten 22 angeordneten zweiten Wassersammelkasten 24. Das in den zweiten Wassersammelkasten 24 einfließende Wasser wird über einen Kühlwasserablauf 25 zurück zur Brennkraftmaschine geführt. Wie aus der perspektivischen Darstellung in Fig. 3 ersichtlich ist, sind die einzelnen, zueinander parallelen Wasserkanäle 23 in eine Vielzahl von nebeneinanderliegenden Kanalröhren 231 mit rechteckigem Querschnitt unterteilt, die durch jeweils eine Kanalwand 232 voneinander getrennt sind. Im Ausführungsbeispiel der Fig. 3 ist jeder Wasserkanal 23 mit vier Kanalröhren 231 ausgebildet. Auf der Ober- und Unterseite eines jeden Wasserkanals 23 sind Wärmeleitelemente 26 in Form von Lamellen oder Rippen angeordnet, die in mechanisch fester und wärmeleitender Verbindung mit den Wänden des Wasserkanals 23 stehen und für eine gute Wärmeabgabe an die sie durchströmende Luft sorgen.

Zur Deckung des Heizwärmebedarfs bei noch nicht warmgelaufenen Verbrennungsmotor und/oder zur Deckung des maximalen Heizwärmebedarfs bei Kraftfahrzeugen mit verbrauchsoptimierten Verbrennungsmotoren, bei denen der Heizwärmebedarf nicht mehr allein von dem Kühlwasserkreislauf des Verbrennungsmotors gedeckt werden kann, ist eine elektrische Zusatzheizung 20 vorgesehen, die ebenfalls von der vom Gebläse 11 geförderten Luft durchströmt wird, die auch den Wärmetauscher 14 durchströmt, und diese zusätzlich aufheizt. Wie aus Fig. 2 und 3 ersichtlich ist, ist die elektrische Zusatzheizung 20 baulich in den Wärmetauscher 14 integriert, und zwar so, daß dieser seine Abmessungen gegenüber einem herkömmlichen, nur vom Kühlwasser durchströmten Wärmetauscher 14 ohne elektrische Zusatzheizung nicht verändert. Die elektrische Zusatzheizung 20 besitzt eine Mehrzahl von elektrischen Heizstäben 27, die sich zwischen den Wasserkanälen 23 und parallel dazu in vorzugsweise gleichmäßiger Verteilung über die Luftdurchtrittsfläche 141 des Wärmetauschers 14 erstrecken. Dabei verlaufen wechselweise ein mit den Wärmeleitelementen 26 bestückter Wasserkanal 23 und ein elektrischer Heizstab 27 parallel nebeneinander. Zur Optimierung der Wärmeabgabe an den Luftstrom ist auch jeder Heizstab 27 auf seinen beiden voneinander abgekehrten Außenseiten mit Wärmeleitelementen 28 in Form von Lamellen oder Rippen versehen. Jeder Heizstab 27 besitzt zwei parallel zueinander verlaufende Stromschienen 30,31 und eine Mehrzahl von sog. PTC-Elementen 29, die voneinander beabstandet zwischen den beiden Stromschienen 30,31 angeordnet und mit diesen mechanisch und elektrisch leitend verbunden sind. Diese PTC-Elemente 29 weisen beispielsweise ein Waben- oder Hohlkastenprofil auf und sind aus einem elektrisch leitenden Material mit positivem Temperaturkoeffizienten hergestellt. Über die beiden Stromschienen 30,31 sind die PTC-Elemente 29 an einem elektrischen Stromkreis angeschlossen. Die beiden Stromschienen 30,31 sind endseitig in Isolatoren 32,33 gehalten, die auf den einander zugekehrten Innenflächen der Wassersammelkästen 22 und 24 befestigt sind. Zur Vermeidung von elektrischen Kurzschlüssen ist zwischen jedem Wasserkanal 23 mit Wärmeleitelementen 26 und jedem Heizstab 27 mit Wärmeleitelementen 28 eine Isolationsplatte 34 angeordnet, die sich parallel zu Wasserkanal 23 und Heizstab 27 zwischen den beiden Wassersammelkästen 22,24 erstreckt. An dieser Isolationsplatte 34 sind die von dem Wasserkanal 23 bzw. Stromschienen 30,31 gehaltenen Wärmeleitelemente 26 bzw. 28 auf voneinander abgekehrten Seiten abgestützt. Wie aus Fig. 3 ersichtlich ist, erstrecken sich die Wasserkanäle 23 mit Wärmeleitelementen 26, die Stromschienen 30,31 mit den PTC-Elementen 29, die Isolationsplatten 34 und die Isolatoren 32,33 über die gesamte in Luftströmungsrichtung gesehene Tiefe des Wärmetauschers 14.

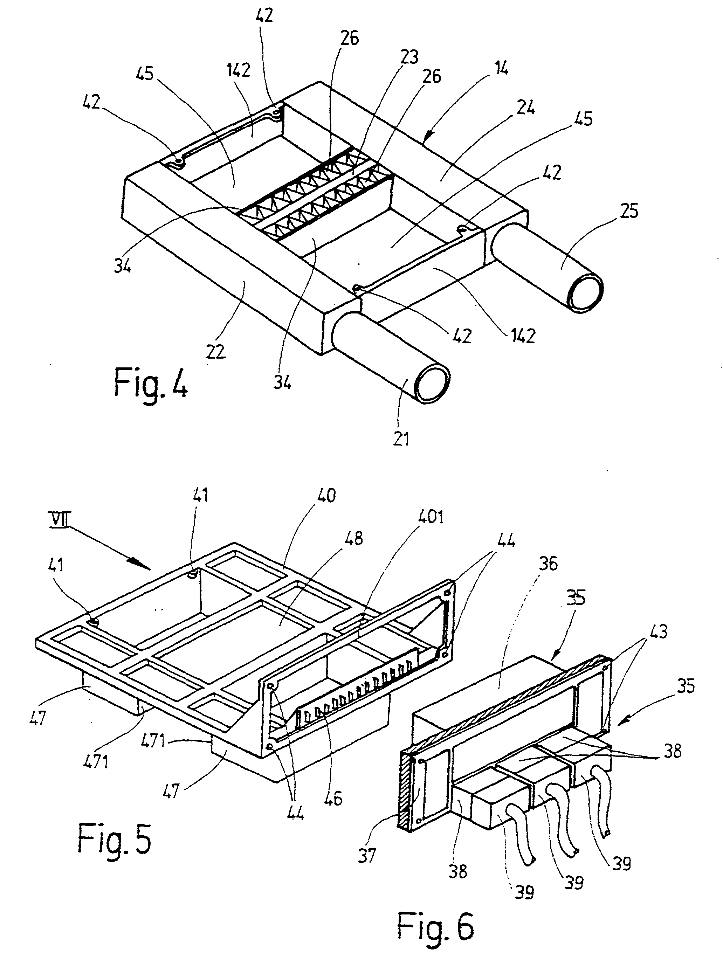

Zur Steuerung der elektrischen Zusatzheizung 20 in Abhängigkeit von den Wärmebedarf bestimmenden Größen, wie Außentemperatur, Kühlwassertemperatur u.dgl., ist ein Steuergerät 35 vorgesehen, das mit dem Wärmetauscher 14 zu einer baulichen Einheit vereinigt ist. Das Steuergerät 35 weist eine Leistungselektronik sowie Kühlkörper zur Abfuhr der in der Leistungselektronik erzeugten Wärme auf, die in ihrer Gesamtheit in Fig. 6 mit dem Kasten 36 symbolisiert sind. Leistungselektronik und Kühlkörper 36 sind auf einer Platine 37 angeordnet, die mit Buchsen 38 für elektrische Anschlußstecker 39 bestückt ist. Außerdem weist die Platine 37 noch eine hier nicht zu sehende Kontaktleiste auf, über welche die Leistungselektronik mit den Heizstäben 27 der elektrischen Zusatzheizung 20 verbindbar ist. Die Kontaktleiste ist auf der von den Anschlußsteckern 39 abgekehrten Bestückungsseite der Platine 37 angeordnet, die auch die Leistungselektronik mit Kühlkörper 36 trägt.

Das Steuergerät 35 ist auf der Lufteintrittsseite des Wärmetauschers 14 nunmehr so angeordnet, daß die Leistungselektronik mit Kühlkörper 36 in dem in den Wärmetauscher 14 eintretenden Luftstrom liegt. Hierzu ist ein Kunststoffrahmen 40 vorgesehen, der auf der die Lufteintrittsfläche bildende Oberseite des in Fig. 4 perspektivisch dargestellten Wärmetauschers 14 bündig aufgelegt und verschraubt ist, und zwar in die beiden Wassersammelkästen 22,24 untereinander starr verbindenden Querträger 142. Hierzu werden Gewindeschrauben durch Durchgangslöcher 41 im Kunststoffrahmen 40 hindurchgesteckt und in Gewindelöchern 42 in den Querträger 142 eingedreht. Der Kunststoffrahmen 40 trägt an seiner dem Wasserzu- und -ablauf 21,25 zugekehrten Frontseite ein vom Rahmen 40 einstückig wegstehendes, rechteckförmiges Rahmenteil 401, auf dem die Platine 37 bündig aufgesetzt und mittels Schrauben, die durch Durchgangslöcher 43 in der Platine 37 hindurchgesteckt und in Gewindelöchern 44 im Rahmenteil 401 eingeschraubt sind, befestigt ist. Statt einer Verschraubung kann auch eine Verclipsung vorgesehen werden, was ebenso für die Befestigung des Kunststoffrahmens 40 an dem Wärmetauscher 14 zutrifft.

Nach Befestigung der Platine 37 am Rahmenteil 401 steht die Leistungselektronik mit Kühlköper 36 über die Luftdurchtrittsfläche 141 des Wärmetauschers 14 vor, so daß sie von der in den Wärmetauscher 14 eintretenden Luft bestrichen wird. Die Kontaktleiste an der Platine 37 ist dabei in eine weitere Kontaktleiste 46 eingesteckt, die auf dem mit dem Kunststoffrahmen 40 in einer Ebene liegenden Rahmenschenkel des Rahmenteils 401 befestigt ist. Von dieser Kontaktleiste 46 aus ist die elektrische Verbindung zu der elektrischen Zusatzheizung 20 hergestellt.

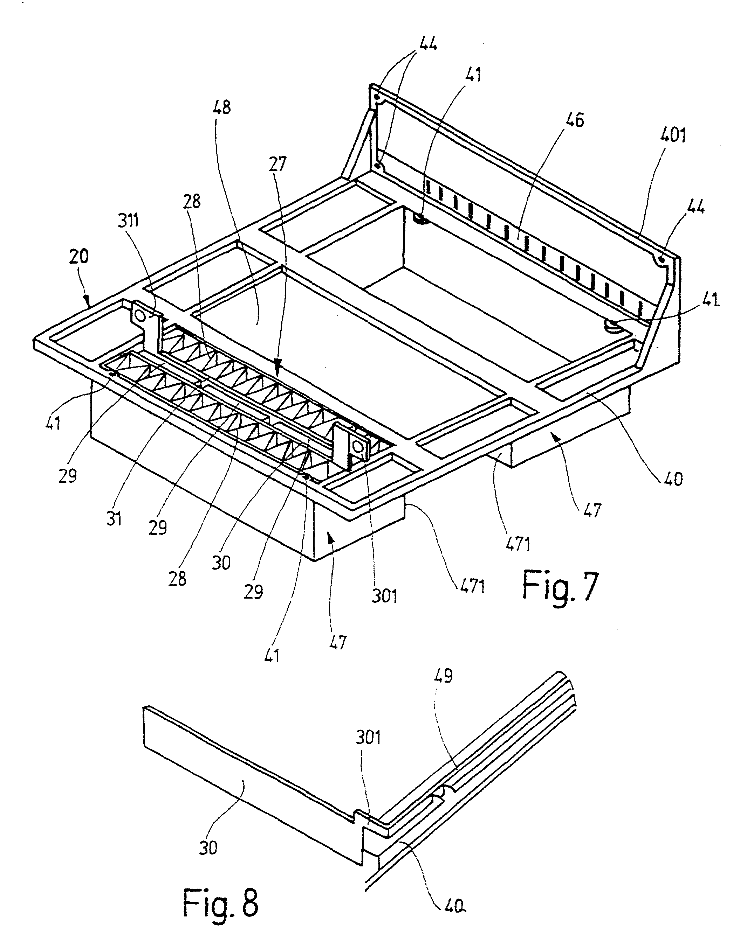

In dem in Fig. 4 dargestellten Wärmetauscher 14 ist die in Fig. 2 und 3 zu sehende elektrische Zusatzheizung 20 noch nicht installiert. Diese wird vielmehr im Kunststoffrahmen 40 vormontiert, wie dies in Fig. 7 zu sehen ist, und mit Aufsetzen des Kunststoffrahmens 40 auf die Oberseite des Wärmetauschers 14 in Fig. 4 in die im Wärmetauscher 14 vorgehaltenen Freiräume 45 eingesetzt, so daß sich insgesamt der in Fig. 2 und 3 komplettierte Wärmetauscher 14 ergibt. Zur Aufnahme der elektrischen Zusatzheizung 20 ist an dem Kunststoffrahmen 40 für jeden Heizstab 27 der elektrischen Zusatzheizung 20 ein rahmenartiger Trog 47 ausgebildet, der an der dem Wärmetauscher 14 zugekehrten Unterseite des Kunststoffrahmens 40 vorsteht und bei Aufsetzen des Kunststoffrahmens 40 auf den Wärmetauscher 14 in den vorgehaltenen Freiraum 45 im Wärmetauscher 14 eintaucht. Im Ausführungsbeispiel der Fig. 6 und 7 sind im Kunststoffrahmen 40 zwei voneinander beabstandete, parallele Tröge 47 vorgesehen, die in einem durch den Wasserkanal 23 mit Wärmeleitelementen 26 des Wärmetauschers 14 bedingten Abstand voneinander angeordnet sind. In jedem Trog 47 ist ein Heizstab 27 der Zusatzheizung 20 aufgenommen. In Fig. 7 ist beispielhaft ein Trog 47 mit einem Heizstab 27, wie er eingangs ausführlich beschrieben worden ist, ausgestattet. Ein gleicher Heizstab 27 wird auch in den anderen in Fig. 7 noch freien Trog 47 eingesetzt. Zwischen diesen beiden Trögen 47 verbleibt im Kunststoffrahmen 40 ein Freiraum 48, der nach Aufsetzen des Kunststoffrahmens 40 auf den Wärmetauscher 14 von dem Wasserkanal 23 mit Wärmeleitelementen 26 des Wärmetauschers 14 in Fig. 4 ausgefüllt wird. Dabei liegen die inneren, längeren Trogwände 471 an den zwischen dem Wasserkanal 23 und den Heizstäben 27 von dem einen Wassersammelkasten 22 zu dem anderen Wassersammelkasten 24 verlaufenden Isolationsplatten 34 an oder übernehmen bei Einsparung der Isolationsplatten 34 deren isolierende Funktion gegenüber den Wärmeleitelementen 26 am Wasserkanal 23.

Wie Fig. 7 zeigt, sind die Stromschienen 30,31 der beiden Heizstäbe 27, zwischen denen jeweils die PTC-Elemente 29 eingeklemmt sind, so angeordnet, daß die Stromschienenanschlüsse gleicher Polarität auf jeweils einer der beiden Längsseiten des Kunststoffrahmens 40 liegen. Im Ausführungsbeispiel der Fig. 7 sind die Anschlußfahnen 301 (Pluspol) der Stromschienen 30 auf dem rechten Rahmenschenkel und die Anschlußfahnen 311 (Minuspol) der Stromschienen 31 auf dem linken Rahmenschenkel des Kunststoffrahmens 40 angeordnet. Auf diesen Rahmenschenkeln des Kunststoffrahmens 40 verlaufen die in Fig. 7 nicht dargestellten elektrischen Verbindungsleitungen von den Heizungsstäben 27 zu der Kontaktleiste 46 am Rahmenschenkel des Rahmenteils 401. Bevorzugt werden die elektrischen Verbindungsleitungen als Kontaktschienen 49 ausgebildet, die in den Rahmenschenkeln des Kunststoffrahmens 40 verlegt und z.B. eingeklemmt oder eingeschmolzen sind und endseitig Kontaktzungen tragen können, die zusammen die zweite Kontaktleiste 46 bilden. In diesem Fall ist die erste Kontaktleiste an der Platine 37 aus Kontaktschuhen zusammengesetzt, die jeweils eine der an den Kontaktschienen 49 ausgebildeten Kontaktzungen übergreifen. In Fig. 8 ist die eine Stromschiene 30 eines Heizstabes 27 dargestellt, die mit einer im seitlichen Rahmenschenkel des Kunststoffrahmens 40 verlegten Kontaktschiene 49 kontaktiert ist. Dabei kann die Anschlußfahne 301 der Stromschiene 30 an die Kontaktschiene 49 angelötet oder mit dieser einstückig ausgebildet sein.

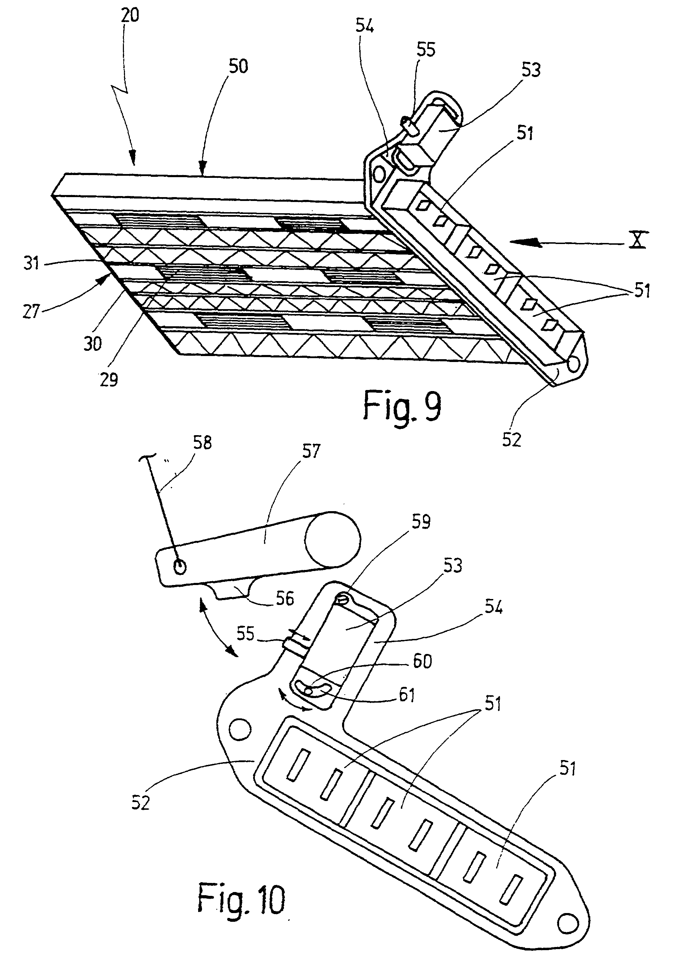

In Fig. 9 ist eine als eigenständiges Heizmodul 50 konzipierte elektrische Zusatzheizung 20 dargestellt, die anders als in Fig. 1 - 8 nicht im Wärmetauscher 14 selbst integriert ist, sondern getrennt von einem herkömmlichen Wärmetauscher in dem den Wärmetauscher 14 durchströmenden Luftstrom eng benachbart zum Wärmetauscher angeordnet ist. Eine räumliche Integration des Heizmoduls 15 in den Wärmetauscher, wie in Fig. 1 - 8, ist aber ohne weiteres möglich. Das Heizmodul 50 ist mit drei Heizstäben 27 ausgestattet, wobei jeder Heizstab 27 wiederum aus zwei Stromschienen 30,31 mit dazwischen angeordneten PTC-Elementen 29 besteht. Die Heizstäbe 27 sind endseitig an Anschlußsteckern 51 angeschlossen, die in einer Steckleiste 52 an der Stirnseite des Heizmoduls 50 nebeneinander angeordnet sind. In dem Heizmodul 50 ist räumlich ein mechanischer Ein-/Ausschalter 53 für die elektrische Zusatzheizung 20 integriert, der von einen im Armaturenbrett oder einem sonstigen Platz im Cockpit des Fahrzeugs plazierten manuellen Bedienknopf (nicht dargestellt) betätigbar ist. Der Ein-/Ausschalter 53 ist dabei auf einer einstückig an der Steckerleiste 52 ausgebildeten Traglasche 54, vorzugsweise justierbar, befestigt und ragt mit einem Betätigungsstößel 55 in den Schwenkweg eines schwenkbar festgelegten Nockens 56 hinein, der im Ausführungsbeispiel der Fig. 10 an einer Luftmischklappe 57 (Fig. 10) ausgebildet ist. Die Luftmischklappe 57 mischt in bekannter Weise einen den Wärmetauscher 14 (Fig. 1) umgehenden Kaltluftstrom mit einem durch den Wärmetauscher 14 erwärmten Warmluftstrom, wobei die Mischlufttemperatur durch die Schwenkstellung der Luftmischklappe 57 bestimmt ist. Die Luftmischklappe 57 wird über einen Bowdenzug 58 (Fig. 10) von einem im Armaturenbrett angeordneten manuell zu bedienenden Temperatureinsteller gebildet (hier nicht dargestellt). Der Betätigungsstößel 55 wirkt unmittelbar auf einen im Stromkreis der elektrischen Zusatzheizung 20 angeordneten Schaltkontakt (hier nicht dargestellt), der in Ruhestellung geöffnet ist und durch Beaufschlagung durch den Nocken 56 in seine den Stromkreis der elektrischen Zusatzheizung 20 schließende Arbeitsstellung übergeht. Der Ein-/Ausschalter 53 ist dabei an der Traglasche 54 derart festgelegt, daß sein Schaltkontakt in der Schwenkendstellung der Luftmischklappe 57 für maximale Warmluftzufuhr geschlossen ist. Der Ein-/Ausschalter 53 kann dabei an der Traglasche 54 verclipst, aufgesteckt oder verschraubt sein.

Im Ausführungsbeispiel der Fig. 10 ist der Ein-/Ausschalter 53 an der Traglasche 54 festgeschraubt, wobei die Möglichkeit einer Justierung des Ein-/Ausschalters 53 bezüglich des Schwenkweges des Nockens 56 an der Luftmischklappe 57 bei der Montage vorgesehen ist. Hierzu ist der Ein-/Ausschalter 53 mittels einer ersten Schraube 59 an der Traglasche 54 schwenkbeweglich befestigt und trägt ein bogenförmiges, zur Schraube 59 konzentrisch angeordnetes Langloch 61, durch das der Schraubenschaft einer in die Traglasche 54 eingeschraubten Schraube 60 hindurchtritt. Bei losen Schrauben 59 und 60 kann der Ein-/Ausschalter 53 auf der Traglasche 54 geschwenkt werden, bis er richtig justiert ist, d.h. so, daß der Nocken 56 in der Schwenkendstellung der Luftmischklappe 57 über den Betätigungsstößel 55 den Schaltkontakt des Ein-/Ausschalters 51 sicher schließt. Nach dieser Einstellung werden die beiden Schrauben 59,60 fest angezogen, so daß der Ein-/Ausschalter 53 in dieser Position unveränderlich festgelegt ist.

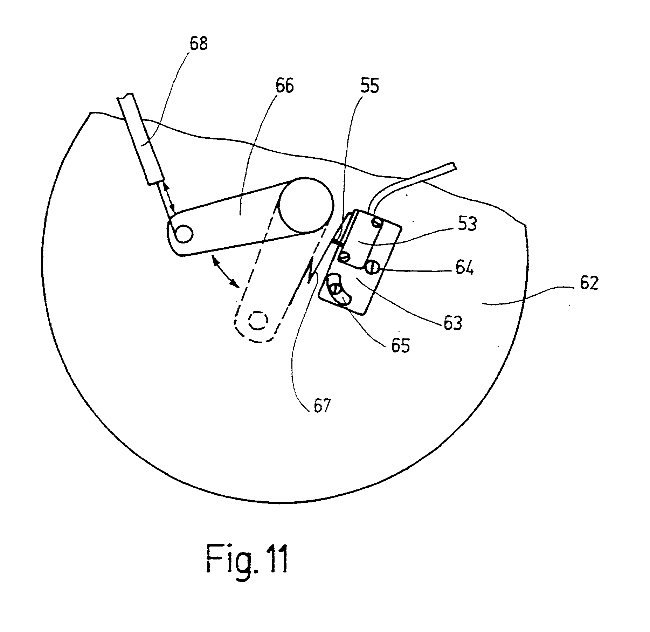

In Fig. 11 ist schematisch angedeutet, daß der Ein-/Ausschalter 53 für den Heizmodul 50 auch getrennt von diesem in der Klimaanlage untergebracht werden kann, wobei eine Anordnung an einer geeigneten Stelle des Gebläses 11 (Fig. 1) bevorzugt wird. Der Ein-/Ausschalter 53 wird dabei an einer am Gebläsegehäuse 52 vorbereiteten Stelle befestigt. Der Ein-/Ausschalter 53 ist auf einer Platte 63 fest montiert, die mittels eines Rundloches 64 und eines Langloches 65 bezüglich des Schwenkweges eines am Gebläsegehäuses 52 festgelegten Schwenkhebels 66 justierbar ist. An der Platte 63 ist eine Federzunge 67 endseitig eingespannt, die auf dem Betätigungsstößel 55 des Ein-/Ausschalters 53 aufliegt und in den Schwenkweg des Schwenkhebels 66 hineinragt. Der Schwenkhebel 66 ist über einen Bowdenzug 68 vom Cockpit des Fahrzeugs aus schwenkbar, wobei wiederum der Ein-/Ausschalter 53 so justiert ist, daß in der in Fig. 11 strichliniert eingezeichneten Schwenkstellung des Schwenkhebels 66 der Schaltkontakt des Ein-/Ausschalters 53 über die Federzunge 67 in seine den Stromkreis der elektrischen Zusatzheizung 20 schließende Arbeitsstellung überführt ist.

## Patentansprüche

1. Heizungs- oder Klimaanlage für eine Fahrgastzelle eines Kraftfahrzeugs mit einem im Kühlwasserkreislauf einer Brennkraftmaschine angeordneten, von einem Luftstrom durchsetzbaren Wärmetauscher und mit einer von dem gleichen Luftstrom durchströmten elektrischen Zusatzheizung (20),
wobei die elektrische Zusatzheizung (20) baulich in dem Wärmetauscher (14) integriert ist,
**dadurch gekennzeichnet,**
**dass** zur Steuerung der elektrischen Zusatzheizung (20) in Abhängigkeit von den Wärmebedarf bestimmenden Größen ein Steuergerät (35) vorgesehen ist, dass am Wärmetauscher (14) so angeordnet ist, dass es von der in den Wärmetauscher (14) einströmenden Luft bestrichen ist.

2. Anlage nach Anspruch 1,
**dadurch gekennzeichnet,**
**dass** das Steuergerät (35) eine Leistungselektronik und wärmeabführende Kühlkörper (36) aufweist und dass die Anordnung des Steuergeräts (35) auf der Lufteintrittsseite des Wärmetauschers (14) so getroffen ist, dass mindestens die Kühlkörper (36) im Luftstrom liegen.

3. Anlage nach Anspruch 1 oder 2,
**dadurch gekennzeichnet,**
**dass** das Steuergerät (35) auf einem Kunststoffrahmen (40) angeordnet ist, der auf der Lufteintrittsseite des Wärmetauschers (14) auf diesen aufgesetzt und mit diesem verbunden, vorzugsweise verclipst oder verschraubt ist.

4. Anlage nach einem der Ansprüche 1 bis 3,
**dadurch gekennzeichnet,**
**dass** der Wärmetauscher (14) eine Mehrzahl von vom Kühlwasser durchströmbaren Wasserkanälen (23), die sich im Parallelabstand voneinander über die Luftdurchtrittsfläche (141) des Wärmetauschers (14) erstrecken und endseitig jeweils in einem Wassersammelkasten (22, 24) münden, sowie mit den Wasserkanälen (23) verbundene Wärmeleitlamellen (26) aufweist und dass die elektrische Zusatzheizung (20) eine Mehrzahl von elektrischen Heizstäben (27) besitzt, die sich zwischen den Wasserkanälen (23) und parallel dazu in vorzugsweise gleichmäßiger Verteilung über die Luftdurchtrittsfläche (141) des Wärmetauschers erstrecken.

5. Anlage nach Anspruch 4,
**dadurch gekennzeichnet,**
**dass** wechselweise ein mit Wärmeleitelementen (26) besetzter Wasserkanal (23) und ein elektrischer Heizstab (27) parallel nebeneinander verlaufen.

6. Anlage nach Anspruch 4 oder 5,
**dadurch gekennzeichnet,**
**dass** jeder Heizstab (27) zwei parallel zueinander verlaufende Stromschienen (30, 31) und eine Mehrzahl von PTC-Elementen (29) besitzt, die voneinander beabstandet zwischen den beiden Stromschienen (30, 31) angeordnet und mit diesen mechanisch und elektrisch leitend verbunden sind.

7. Anlage nach Anspruch 6,
**dadurch gekennzeichnet,**
**dass** zwischen jedem Heizstab (27) und einem benachbarten Wasserkanal (23) mindestens eine elektrische Isolationsplatte (34) angeordnet ist, an der sich einerseits die mit dem Wasserkanal (23) verbundenen Wärmeleitelemente (28) und andererseits von den Stromschienen (30, 31) abstehende Wärmeleitelemente (28) abstützen.

8. Anlage nach Anspruch 7,
**dadurch gekennzeichnet,**
**dass** die Wasserkanäle (23) endseitig jeweils in einem Wassersammelkasten (22, 24) münden und dass die Stromschienen (30, 31) endseitig in an jedem Wassersammelkasten (22, 24) festgelegten Isolatoren (23, 33) gehalten sind.

9. Anlage nach Anspruch 8,
**dadurch gekennzeichnet,**
**dass** die Wasserkanäle (23) mit Wärmeleitementen (26), die Stromschienen (30, 31) mit Wärmeleitelementen (28), die Isolationsplatten (34) und die Isolatoren (32, 33), sich über die gesamte, in Luftführungsrichtung gesehene Tiefe des Wärmetauschers (14) erstrecken.

10. Anlage nach Anspruch 9,
**dadurch gekennzeichnet,**
**dass** jeder Wasserkanal (23) in mehrere, in der Tiefe des Wärmetauschers (14) gesehen nebeneinanderliegende, durch jeweils eine Kanalwand (231) voneinander getrennte Kanalröhren (231) mit rechteckigem Querschnitt unterteilt ist.

11. Anlage nach einem der Ansprüche 3 bis 10,
**dadurch gekennzeichnet,**
**dass** die zwischen den Wasserkanälen (23) des Wärmetauschers (14) angeordneten elektrischen Heizstäbe (27) der Zusatzheizung (20) jeweils in einem von der dem Wärmetauscher (14) zugekehrten Unterseite des Kunststoffrahmens (40), vorzugsweise einstückig, abstehenden, in den Wärmetauscher (14) eintauchenden, rahmenartigen Trog (47) aufgenommen sind und vorzugsweise dass die längeren Trogwände (471) die zwischen den Heizstäben (27) und den Wasserkanälen (23) mit Wärmeleitelementen (26) verlaufenden Isolationsplatten (34) bilden.

12. Anlage nach Anspruch 11,
**dadurch gekennzeichnet,**
**dass** die Heizstäbe (27) in den Trögen (47) so aufgenommen sind, dass ihre die gleiche Polarität aufweisenden Anschlüsse auf dem gleichen Rahmenschenkel des Kunststoffrahmens (40) und Anschlüsse unterschiedlicher Polarität auf gegenüberliegenden Rahmenschenkeln jeweils oberhalb des Kunststoffrahmens (40) liegen.

13. Anlage nach Anspruch 12,
**dadurch gekennzeichnet,**
**dass** der Kunststoffrahmen (40) eine mit der Zusatzheizung (20) elektrisch verbundene erste Kontaktleiste (46) trägt, die mit den Anschlüssen (301, 311) der Heizstäbe (27) elektrisch verbunden ist, dass die Leistungselektronik mit Kühlkörper (36) auf einer am Kunststoffrahmen (40) befestigbaren, vorzugsweise verclips- oder verschraubbaren Platine (37) angeordnet ist und dass die Platine (37) einerseits eine die erste Kontaktleiste (46) kontaktierende zweite Kontaktleiste und andererseits Buchsen (38) für elektrische Anschlussstecker (39) aufweist.

14. Anlage nach Anspruch 13,
**dadurch gekennzeichnet,**
**dass** der Kunststoffrahmen (40) zur Halterung der Platine (37) ein von der von dem Wärmetauscher (14) abgekehrten Oberseite des Kunststoffrahmens (40) einstückig wegstehendes, rechteckförmiges Rahmenteil (401) aufweist, auf dem die Platine (37) mit durch das Rahmenteil (401) hindurchragender Leistungselektronik mit Kühlkörpern (36) bündig aufgesetzt und befestigt ist.

15. Anlage nach Anspruch 13 oder 14,
**dadurch gekennzeichnet,**
**dass** die erste Kontaktleiste (46) auf dem mit dem Kunststoffrahmen (40) in einer Ebene liegenden unteren Rahmenschenkel des Rahmenteils (401) angeordnet ist.

16. Anlage nach einem der Ansprüche 13 bis 15,
**dadurch gekennzeichnet,**
**dass** die elektrischen Verbindungsleitungen zwischen den Heizungsanschlüssen (301, 311) und der ersten Kontaktleiste (46) als Kontaktschienen (49) ausgebildet sind, die im Kunststoffrahmen (40) verlegt sind.

17. Anlage nach Anspruch 16,
**dadurch gekennzeichnet,**
**dass** die Kontaktschienen (49) endseitig Kontaktzungen tragen, die zusammen die erste Kontaktleiste (46) bilden und dass die zweite Kontaktleiste an der Platine (37) aus die Kontaktzungen übergreifenden Kontaktschuhen zusammengesetzt ist.

18. Anlage nach einem der Ansprüche 1 bis 17,
**dadurch gekennzeichnet,**
**dass** ein Ein-/Ausschalter (53) für die elektrische Zusatzheizung (20) räumlich in der Zusatzheizung (20) integriert und von einem im Armaturenbrett des Fahrzeugs platzierten manuellen Bedienknopf betätigbar ist.

19. Anlage nach Anspruch 18,
**dadurch gekennzeichnet,**
**dass** der Ein-/Ausschalter (53) mit einem Schaltkontakt im Stromkreis der Zusatzheizung (20) angeordnet ist und mit einem Schaltkontaktbetätigungsstößel (55) in den Schwenkweg eines über den Bedienknopf, vorzugsweise mittels eines Bowdenzugs (58) schwenkbar festgelegten Nockens (56) hineinragt.

20. Anlage nach Anspruch 19,
**dadurch gekennzeichnet,**
**dass** der Nocken (56) an einer Luftmischklappe (57) zum Mischen eines den Wärmetauscher (14) umgehenden Kaltluftstroms und eines durch den Wärmetauscher (14) erwärmten Warmluftstroms angeordnet ist, dass der Ein-/Ausschalter (53) so justiert ist, dass sein Schaltkontakt in der Schwenkendstellung der Luftmischklappe (57) für maximale Warmluftzufuhr geschlossen ist, und dass der Bedienknopf von einem die Schwenkstellung der Luftmischklappe (57) vorgebenden Temperatureinsteller gebildet ist.

21. Anlage nach einem der Ansprüche 1 bis 17,
mit einem dem Wärmetauscher (14) vorgeordneten Gebläse (11) zur Erzeugung des den Wärmetauscher (14) und die elektrische Zusatzheizung (20) durchströmenden Luftstroms,
**dadurch gekennzeichnet,**
**dass** ein Ein-/Ausschalter (53) für die Zusatzheizung (20) räumlich am Gebläse (11) angeordnet und von einem im Armaturenbrett platzierten, manuellen Bedienknopf betätigbar ist.

22. Anlage nach Anspruch 21,
**dadurch gekennzeichnet,**
**dass** der Ein-/Ausschalter (53) mit einem Schaltkontakt im Stromkreis der Zusatzheizung (20) angeordnet ist und mit einem Schaltkontaktbetätigungsstößel (55) in den Schwenkweg eines über den Bedienknopf, vorzugsweise mittels eines Bowdenzugs (68), schwenkbaren Hebels (66) hineinragt.

23. Anlage nach Anspruch 22,
**dadurch gekennzeichnet,**
**dass** zwischen dem Schaltkontaktbetätigungsstößel (55) und dem Schwenkhebel (66) eine federnde Schaltzunge (67) angeordnet ist und dass der Schwenkhebel (66) an der Schaltzunge (67) angreift, die ihrerseits den Schaltkontaktbetätigungsstößel (55) beaufschlagt.

## Claims

1. Heating or air conditioning system for a passenger compartment of a motor vehicle, with a heat exchanger through which an airflow passes located in the coolant circuit of an internal combustion engine and with an electric auxiliary heater (20) through which the same airflow passes, the electric auxiliary heater (20) being integrated with the heat exchanger (14),
**characterised in that**
a control unit (35) is provided for controlling the electric auxiliary heater (20) in dependence on values determining heat demand, said control unit being so mounted on the heat exchanger (14) that it is swept by the air flowing into the heat exchanger (14).

2. System according to claim 1,
**characterised in that**
the control unit (35) is provided with power electronics and with heat-eliminating heat sinks (36), and **in that** the control unit (35) is so arranged on the air inlet side of the heat exchanger (14) that at least the heat sinks (36) lie in the path of the airflow.

3. System according to claim 1 or 2,
**characterised in that**
the control unit (35) is mounted on a plastic frame (40) attached to the heat exchanger (14) on its air inlet side and connected thereto preferably by means of clips or bolts.

4. System according to any of claims 1 to 3,
**characterised in that**
the heat exchanger (14) is provided with a plurality of coolant ducts (23) through which the coolant passes and which extend parallel to and at a distance from one another over the air passage surface (141) of the heat exchanger (14), each terminating in a header tank (22, 24), and with heat-conducting fins (26) connected to the coolant ducts (23), and **in that** the electric auxiliary heater (20) is provided with a plurality of electric heating elements (27) extending between and parallel to the coolant ducts (23) and preferably evenly distributed over the air passage surface (141) of the heat exchanger.

5. System according to claim 4,
**characterised in that**
coolant ducts (23) fitted with heal-conducting elements (26) and electric heating elements (27) alternate in a parallel arrangement.

6. System according to claim 4 or 5,
**characterised in that**
each heating element (27) comprises two bus bars (30, 31) extending parallel to each other and a plurality of PTC elements (29) arranged at a distance from one another between the two bus bars (30, 31) and connected thereto both mechanically and electroconductively.

7. System according to claim 6,
**characterised in that**
between each heating element (27) and an adjacent coolant duct (23), there is at least one electric insulation plate (34) on which the heat-conducting elements (28) connected to the coolant duct (23) on the one hand and the heat-conducting elements (28) projecting from the bus bars (30, 31) on the other hand are supported.

8. System according to claim 7,
**characterised in that**
each coolant duct (23) terminates in a header tank (22, 24) and **in that** the ends of the bus bars (30, 31) are held in insulators (23, 33) fixed to each header tank (22, 24).

9. System according to claim 8,
**characterised in that**
the coolant ducts (23) with heat-conducting elements (26), the bus bars (30, 31) with heat-conducting elements (28), the insulation plates (34) and the insulators (32, 33) extend over the entire depth of the heat exchanger (14) as viewed in the direction of airflow.

10. System according to claim 9,
**characterised in that**
each coolant ducts (23) is divided into several duct tubes (231) of rectangular cross-section adjacent to one another in the depth direction of the heat exchanger (14) and separated from one another by a duct wall (231).

11. System according to any of claims 3 to 10,
**characterised in that**
each of the electric heating elements (27) of the auxiliary heater (20) located between the coolant ducts (23) of the heat exchanger (14) is contained in a frame-like tray (47) projecting preferably integrally from the underside of the plastic frame (40) facing the heat exchanger (14) and dipping into the heat exchanger (14), and preferably **in that** the longer tray walls (471) form the insulation plates (34) extending between the heating elements (27) and the coolant ducts (23) with heat-conducting elements (26).

12. System according to claim 11,
**characterised in that**
the heating elements (27) are so contained in the trays (47) that their connections of equal polarity lie on the same frame leg of the plastic frame (40) and connections of opposite polarity lie on opposite frame legs above the plastic frame (40).

13. System according to claim 13,
**characterised in that**
the plastic frame (40) carries a first multiple plug (46) electrically connected to the auxiliary heater (20) and to the connections (301, 311 ) of the heating elements (27), **in that** the power electronics unit with heat sink (36) is located on a circuit board (37) attachable to the plastic frame (40) preferably by means of clips or bolts, and **in that** the circuit board (37) is provided with a second multiple plug contacting the first multiple plug (46) on the one hand and with sockets (38) for electric connectors (39) on the other hand.

14. System according to claim 13,
**characterised in that**
the plastic frame (40) is provided with an integral rectangular frame section (401) projecting from the top of the plastic frame (40) remote from the heat exchanger (14) to retain the circuit board (37), on which the circuit board (37) is flush-mounted and secured, the power electronics unit with heat sinks (36) extending through the frame section (401).

15. System according to claim 13 or 14,
**characterised in that**
the first multiple plug (46) is located on the lower frame leg of the frame section (401) lying in one and the same plane with the plastic frame (40).

16. System according to any of claims 13 to 15,
**characterised in that**
the electric connecting lines between the heater connections (301, 311) and the first multiple plug (46) are designed as contact bars (49) arranged in the plastic frame (40).

17. System according to claim 16,
**characterised in that**
the ends of the contact bars (49) support contact studs which together form the first multiple plug (46), and **in that** the second multiple plug on the circuit board (37) consists of contact shoes covering the contact studs.

18. System according to any of claims 1 to 17,
**characterised in that**
an on/off switch (53) for the electric auxiliary heater (20) is spatially integrated into the auxiliary heater (20) and operated from a manual button located in the instrument panel of the vehicle.

19. System according to claim 18,
**characterised in that**
the on/off switch (53) is connected into the circuit of the auxiliary heater (20) with a switching contact and projects with a switching contact operating plunger (55) into the pivoting path of a cam (56) pivoted by means of the control button, preferably by means of a cable (58).

20. System according to claim 19,
**characterised in that**
the cam (56) is located on a blend air door (57) for mixing a cold airflow bypassing the heat exchanger (14) and a warm airflow heated by the heat exchanger (14), **in that** the or/off switch (53) is so adjusted that its switching contact is closed in the pivoting end position of the blend air door (57) for maximum warm air supply, and **in that** the control button is represented by a temperature adjuster determining the pivoting position of the blend air door (57).

21. System according to any of claims 1 to 17, with a fan (11) located upstream of the heat exchanger (14) for the generation of the airflow passing through the heat exchanger (14) and the electric auxiliary heater (20),
**characterised in that**
an on/off switch (53) for the auxiliary heater (20) is spatially located on the fan (11) and operated from a manual button located in the instrument panel of the vehicle.

22. System according to claim 21,
**characterised in that**
the on/off switch (53) is connected into the circuit of the auxiliary heater (20) with a switching contact and projects with a switching contact operating plunger (55) into the pivoting path of a lever (66) pivoted by means of the control button, preferably by means of a cable (68).

23. System according to claim 22,
**characterised in that**
a spring-loaded reed (67) is located between the switching contact operating plunger (55) and the pivoting lever (66), and **in that** the pivoting lever (66) acts on the reed (67), which in turn acts on the switching contact operating plunger (55).

## Revendications

1. Installation de chauffage ou de climatisation pour un habitacle d'un véhicule automobile comportant un échangeur de chaleur, qui est disposé dans le circuit de l'eau de refroidissement d'un moteur à combustion interne et peut être traversé par un courant d'air, et un dispositif de chauffage électrique supplémentaire (20) traversé par un même courant d'air, le dispositif de chauffage supplémentaire (20) étant intégré par construction dans l'échangeur de chaleur (14), **caractérisée en ce que**
pour la commande du dispositif de chauffage électrique supplémentaire (20) il est prévu, en fonction de grandeurs déterminant le besoin en chaleur, et il est prévu un appareil de commande (35), qui est disposé sur l'échangeur de chaleur (14) de telle sorte qu'il est balayé par l'air pénétrant dans l'échangeur de chaleur (14).

2. Installation selon la revendication 1, **caractérisée en ce**
**que** l'appareil de commande (35) possède un système électronique de puissance et un corps de refroidissement (36) qui évalue la chaleur, et que le montage de l'appareil de commande (35) sur le côté d'entrée d'air de l'échange de chaleur (14) est tel qu'au moins les corps de refroidissement (36) sont situés dans le courant d'air.

3. Installation selon la revendication 1 ou 2, **caractérisée en ce**
**que** l'appareil de commande (35) est monté sur un cadre en matière plastique (40), qui est disposé sur l'échangeur de chaleur (14) sur le côté d'entrée de l'air de ce dernier et est relié à ce dernier de préférence par agrafage ou par vissage.

4. Installation selon l'une des revendications 1 à 3, **caractérisée en ce**
**que** l'échangeur de chaleur (14) comporte une multiplicité de canaux de circulation d'eau (23), qui peuvent être parcourus par l'eau de refroidissement et qui s'étendent parallèlement à distance les uns des autres sur la surface de passage de l'air (41) de l'échangeur de chaleur (14) et débouchent côté extrémité respectivement dans une boîte de collecte d'eau (22, 24), et comportant des lamelles de thermoconduction (26), qui sont reliées aux canaux de circulation d'eau (23) et que le dispositif de chauffage électrique supplémentaire (20) comporte une multiplicité de barres de chauffage électriques (25), qui s'étendent entre les canaux de circulation d'eau (23) et parallèlement à ces derniers selon une distribution de préférence uniforme sur la surface de passage de l'air (141) de l'échangeur de chaleur.

5. Installation selon la revendication 4, **caractérisée en ce**
**qu'**un canal de circulation d'eau (23), occupé par des éléments de thermoconduction (26), et une barre de chauffage électrique (27) s'étendent d'une manière alternée, parallèlement côte-à-côte.

6. Installation selon la revendication 4 ou 5, **caractérisée en ce**
**que** chaque barre de chauffage (26) possède deux rails conducteurs (30, 31) qui sont parallèles entre eux, et une multiplicité d'éléments à coefficient de température positif PTC (29), qui sont disposés à distance les uns des autres dans les deux rails conducteurs (30, 31) et sont reliées mécaniquement et d'une manière électriquement conductrice à ces derniers.

7. Installation selon la revendication 6, **caractérisée en ce**
**qu'**entre chaque barre de chauffage (27) et un canal voisin de circulation d'air (23) est disposée au moins une plaque isolante électrique (34), sur laquelle prennent appui d'une part les éléments de thermoconduction (28) reliés au canal de circulation d'eau (23) et d'autre part des éléments de thermoconduction (28) qui font saillie à partir des rails conducteurs (30, 31).

8. Installation selon la revendication 7, **caractérisée en ce**
**que** les canaux de circulation d'air (23) débouchent, au niveau de leur extrémité, respectivement dans une boîte de collecte d'eau (22, 24) et que les rails conducteurs (30, 32) sont retenus, au niveau de leurs extrémités, dans des isolateurs (23, 33) qui sont fixés à chaque boîte de collecta d'eau (22, 24).

9. Installation selon la revendication 8, **caractérisée en ce**
**que** les canaux de circulation d'eau (23) équipés des éléments thermoconducteurs (28), des plaques isolantes (34) et des isolateurs (32, 33), s'étendent sur toute la profondeur de l'échangeur de chaleur (14), vue dans la direction de guidage de l'air.

10. Installation selon la revendication 9, **caractérisée en ce**
**que** chaque canal de circulation d'air (23) est divisé en plusieurs tubes (231) possédant une section transversale rectangulaire, qui sont disposés côte-à-côte dans le sens de profondeur de l'échangeur de chaleur (14) et sont séparés les uns des autres respectivement par une paroi de canal (231).

11. Installation selon l'une des revendications 3 à 10, **caractérisée en ce**
**que** les barres de chauffage électrique (25) du dispositif de chauffage supplémentaire (20), qui sont disposées entre les canaux de circulation d'air (23) de l'échangeur de chaleur (14), sont logés respectivement dans une auge en forme de cadre (47), qui fait saillie, de préférence d'un seul tenant, à partir du côté inférieur du corps en matière plastique (40), qui est tourné vers l'échangeur de chaleur (14), et pénètre dans l'échangeur de chaleur (14), et que de préférence les parois les plus longues (47) des auges forment les plaques isolantes (34), qui s'étendent entre les barres de chauffage (27) et les canaux de circulation d'eau (23) comportant des éléments de thermoconduction (26).

12. Installation selon la revendication 11, **caractérisée en ce**
**que** les barres de chauffage (27) sont logés dans des auges (47) de telle sorte que leurs bornes, qui possèdent la même polarité, sont situées sur la même branche du cadre en matière plastiqua (40) et que leurs bornes possédant des polarités différentes sont situées sur des branches opposées du cadre, respectivement au-dessus du cadre en matière plastique (40).

13. Installation selon la revendication 12, **caractérisée en ce**
**que** le cadre en matière plastique (1) porte une première barrette de contact (46), qui est reliée électriquement au dispositif de chauffage supplémentaire (20) et qui reliée électriquement aux bornes (301, 311) des barres de chauffage (27), que le système électronique de puissance équipé du corps de refroidissement (36) est disposé une platine (35) pouvant être fixée sur le cadre en matière plastique (40) de préférence par agrafage ou vissage, et que la platine (37) comporte d'une part une seconde barrette de contact, qui est en contact avec la première barrette de contact (46), et d'autre part des douilles (38) pour des connecteurs électriques de raccordement (39).

14. Installation selon la revendication 13, **caractérisée en ce**
**que** le corps en matière plastique (40) servant à retenir la platine (36) possède un élément de cadre rectangulaire (401), qui fait saillie d'un seul tenant à partir du côté supérieur, du corps en matière plastique (40) situé à l'opposé de l'échangeur de chaleur (14), et sur lequel la platine (37) comportant le système électronique de puissance traversant l'élément de cadre (411) est montée et fixée de niveau avec des corps de refroidissement (36).

15. Installation selon la revendication 13 ou 14, **caractérisée en ce**
**que** la première barrette de contact (46) est disposée sur la branche inférieure de l'élément de cadre (411) qui est située avec le cadre en matière plastique (40) dans un plan.

16. Installation selon l'une des revendications 13 à 15 , **caractérisée en ce**
**que** les lignes électriques de liaison entre les bornes de chauffage (301, 311) et la première barrette de contact (46) sont agencées sous la forme de rails de contact (49), qui sont montés dans le cadre en matière plastique (40).

17. Installation selon la revendication 16, **caractérisée en ce**
**que** les rails de contact (49) portent, côté extrémité, des languettes de contact, qui forment conjointement la première barrette de contact (46) et que la seconde barrette de contact est la platine (37) est formée par la réunion de patins de contact, qui s'engagent par dessus les languettes de contact.

18. Installation selon l'une des revendications 1 à 17, **caractérisée en ce**
**qu'**un interrupteur marche/arrêt (53) pour le dispositif de chauffage électrique supplémentaire (20) est intégré spatialement dans le dispositif de chauffage supplémentaire (20) et peut être actionné par une tête manuelle d'actionnement, installée dans le tableau de bord du véhicule.

19. Installation selon la revendication 18, **caractérisée en ce**
**que** l'interrupteur marche/arrêt (53) est disposé avec un contact de commutation dans le circuit du dispositif de chauffage supplémentaire (20) et pénètre, avec un poussoir (55) d'actionnement du contact de commutation, dans le trajet de pivotement d'une came (56) qui est fixée de manière à pouvoir pivoter au-dessus du bouton d'actionnement, de préférence à l'aide d'un câble Bowden (58).

20. Installation selon la revendication 19, **caractérisée en ce**
**que** la came (56) est disposée sur un volet de mélange d'air (57) servant à mélanger un courant d'air froid qui passe autour de l'échangeur de chaleur (14) et un courant d'air chaud qui est chauffé par l'échangeur de chaleur (14), que l'interrupteur de marche/arrêt (53) est ajusté de telle sorte que son contact de commutation est fermé dans la position finale de commutation du volet de mélange d'air (57) pour l'envoi maximum d'air chaud, et que le bouton d'actionnement est formée par un dispositif de réglage de température, qui prédétermine la position de pivotement du volet de mélange d'air (57).

21. Installation selon l'une des revendications 1 à 17,
comportant un ventilateur (11) qui est disposé en amont de l'échangeur de chaleur (14) et sert à produire le courant d'air traversant l'échangeur de chaleur (14) et le dispositif de chauffage électrique supplémentaire (20),
**caractérisé en ce**
**qu'**un interrupteur de marche/arrêt (53) pour le dispositif de chauffage supplémentaire (20) est disposé spatialement sur le ventilateur (11) et peut être actionné par un bouton manuel d'actionnement, qui est installé dans le tableau de bord,

22. Installation selon la revendication 21, **caractérisée en ce**
**qu'**un interrupteur marche/arrêt (53) est disposé au moyen d'un contact de commutation dans le circuit du dispositif de chauffage supplémentaire (20), au moyen d'un poussoir (55) d'actionnement du contact de commutation, dans le trajet de pivotement d'un levier (66) qui peut pivoter à l'aide du bouton d'actionnement, de préférence à l'aide d'un câble Bowden (68).

23. Installation selon la revendication 22, **caractérisée en ce**
**qu'**une languette élastique de commutation (67) est disposée entre le poussoir (55) d'actionnement du contact de commutation et le levier pivotant (66) et que le levier pivotant (66) attaque la languette de commutation (67), qui pour sa part charge le poussoir (55) d'actionnement du contact de commutation.
